# EUROPEAN PATENT SPECIFICATION

(11) **EP 4 491 445 B1**
(45) Date of publication and mention of the grant of the patent: **22.07.2026**
(21) Application number: 23877542.3
(22) Date of filing: 21.09.2023
(51) Int. Cl.: B60L 58/10, B60L 3/00, H02J 7/00, G06F 3/06, H02J 7/80, G06F 13/38, H04L 12/40, B60L 3/12, H01M 10/42, H01M 10/48

(54) **BATTERY MANAGEMENT APPARATUS, BMS DATA STORAGE SYSTEM, AND BMS DATA STORAGE METHOD**
BATTERIEVERWALTUNGSVORRICHTUNG, BMS-DATENSPEICHERSYSTEM UND BMS-DATENSPEICHERVERFAHREN
APPAREIL DE GESTION DE BATTERIE, SYSTÈME DE STOCKAGE DE DONNÉES DE BMS ET PROCÉDÉ DE STOCKAGE DE DONNÉES DE BMS

(30) Priority: 12.10.2022 KR 20220130536
(43) Date of publication of application: 15.01.2025
(60) Divisional application: 26175943.5
(73) Proprietor: LG Energy Solution, Ltd., Seoul 07335 (KR)
(72) Inventor: CHOI, Moon Gyu, Daejeon 34122 (KR)
(74) Representative: Plasseraud IP
(86) International application number: PCT/KR2023/014340
(87) International publication number: WO 2024/080614

(56) References cited:
- CN-A- 104 253 488
- CN-A- 110 165 689
- KR-A- 20210 108 816
- KR-A- 20210 108 816
- KR-B1- 102 225 191
- KR-B1- 102 225 191
- KR-B1- 102 373 347
- KR-B1- 102 373 347
- US-A1- 2020 274 350
- US-A1- 2020 274 369

## Description

### [Cross Reference to Related Application]

This application claims priority to and the benefit of Korean Patent Application No. 10-2022-0130536 filed in the Korean Intellectual Property Office on October 12, 2022.

### [Technical Field]

The present invention relates to a battery management apparatus, a battery management system (BMS) data storage system and a BMS data storing method, and more particularly, to a battery management apparatus, a BMS data storage system and a BMS data storing method that can safely backup BMS data on emergency such as fire.

### [Background Art]

Secondary batteries, capable of recharging and reuse, are manufactured as battery modules or packs by connecting multiple battery cells in series based on the required output capacity, and serve as power sources for diverse applications. These batteries are used in small, high-tech electronic devices like smart phones, as well as power sources in a variety of fields including electric bicycles, electric vehicles, and energy storage systems (ESS).

A battery module or pack, including multiple battery cells, faces safety and operational efficiency issues if certain cells encounter overvoltage, overcurrent, or overheating, thereby necessitating the need for a detection means to detect such overvoltage, overcurrent, or overheating. Therefore, the battery module or battery pack is equipped with a battery management system (BMS) that measures voltage values of respective battery cells and monitors and controls voltage status of the battery cells based on the measured voltage values.

The battery management system stores information related to battery usage records and items related to diagnostic occurrences in a storage device within the battery management system of the battery module or battery pack, but however, the stored records may be lost in the event of an emergency, such as a fire occurring in a vehicle that is powered by the battery module or battery pack. To solve this problem, an attempt is being made to preserve information in real time using cloud services, but however, a separate expensive device is required to implement this function and recorded information cannot be secured in the event of a failure of the separate expensive device.

Example of background art can be found in documents CN 110 165 689 A, KR 102 225 191 B1 and KR 2021 0108816 A.

### [Detailed Description of the Invention]

### [Technical Problem]

To obviate one or more problems of the related art, embodiments of the present disclosure provide a battery management apparatus.

To obviate one or more problems of the related art, embodiments of the present disclosure also provide a system for storing battery management system (BMS) data related to battery state.

To obviate one or more problems of the related art, embodiments of the present disclosure also provide a method for storing battery management system (BMS) data related to battery state.

### [Technical Solution]

In order to achieve the objective of the present disclosure, a battery management apparatus, for managing battery management system (BMS) data related to a state of a battery, is defined in the appended claims.

According to another embodiment of the present disclosure, a system for storing battery management system (BMS) data related to a state of a battery is also provided.

### [Advantageous Effects]

According to the embodiment of the present invention as described above, even in a fire occurring in a vehicle, BMS data can be backed up to another safe location before a battery management device is completely destroyed by the fire.

Additionally, even if the battery pack burns out, it is possible to analyze the cause of the fire and other defects through the BMS data backed up in another safe location. Hereafter "embodiment(s)" refer to embodiment(s) of the present disclosure.

### [Brief Description of the Drawings]

FIG. 1 shows a structure of a battery system to which embodiments of the present invention may be applied.
FIG. 2 is a diagram conceptually showing a communication method between a plurality of Electronic Control Units (ECUs) in a car, which is one of the embodiments to which the present invention is applied.
FIG. 3 shows an operational flowchart between components in a Battery Management System (BMS) data storing method according to an embodiment of the present disclosure.
FIG. 4 shows a structure of a Controlled Area Network (CAN) communication frame used in the BMS data storing method according to embodiments of the present invention.
FIG. 5 shows an operational flowchart between components in the BMS data storing method according to another embodiment of the present disclosure.
FIG. 6 is a block diagram of a battery management apparatus according to embodiments of the present invention.
   100: battery management apparatus (BMS)
   210: Vehicle Control Unit (VCU)
   220: Electronic Control Unit (ECU)

### [Best Modes for Practicing the Disclosure]

The present invention may be modified in various forms and have various embodiments, and specific embodiments thereof are shown by way of example in the drawings and will be described in detail below . Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, exemplary embodiments of the present invention will be described in detail with reference to the accompanying drawings.

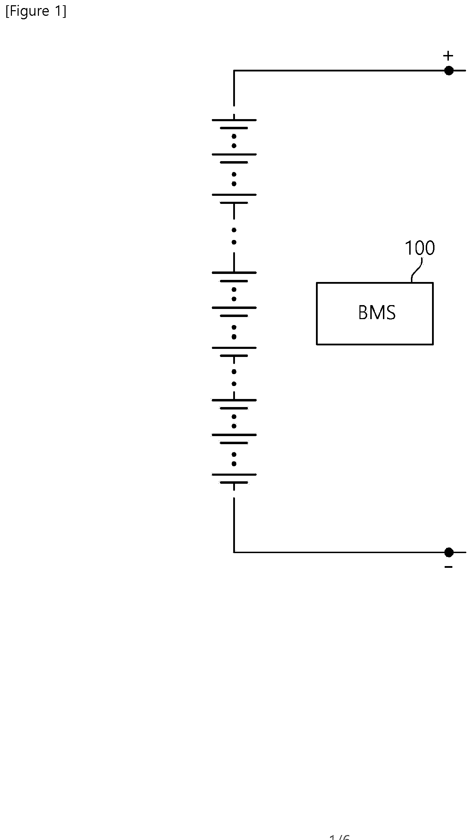

FIG. 1 shows a structure of a battery system to which embodiments of the present invention may be applied.

A battery pack or battery module in FIG. 1 may include a plurality of battery cells connected in series. The battery pack or battery module may be connected to a load through a positive and a negative terminals and perform charging/discharging operation. The most commonly used battery cells are lithium-ion (Li-Ion) battery cells. A battery management system (BMS) may be installed for each of the battery packs or battery modules.

The battery management system (BMS) may monitor a current, a voltage, and a temperature of each battery pack to manage, calculate a state of charge (SOC) based on the monitoring results, and control charging and discharging. Here, the SOC refers to a current charged state of a battery, represented in percent points [%]. Meanwhile, state of health (SOH) may be an indicator of current state as to degree of battery aging, represented in percent points [%].

As such, the BMS may monitor battery cells, read cell voltages, and transmit the cell voltages to other systems connected to the battery. Furthermore, the BMS may balance the charge of the battery cells evenly to extend the life of the battery system. Here, the battery system is being used as a concept including a plurality of batteries and a battery management system (BMS).

To perform such operations, the BMS may include various components such as fuses, current sensing elements, thermistors, switches, and balancers, and further include an MCU (Micro Controller Unit) or BMIC (Battery Monitoring Integrated Chip) to interface with and control these components in most cases. Here, the BMIC may be located inside the BMS and may be an Integrated Circuit (IC)-type component that measures information such as a voltage, a temperature, and a current of the battery cell/battery pack/battery module.

In addition, the battery management system may monitor battery cells, read cell voltages, and transmit them to other systems connected to the battery. For this, the BMS may include a communication module for communicating with other systems in a device including the battery system. The communication module of the BMS may communicate with other systems using the Controller Area Network (CAN). Here, components, modules or systems in the BMS may be connected to one another through a CAN bus.

Meanwhile, the battery management system (BMS) stores battery usage record related information and diagnostic occurrence related items in a storage device (e.g., electrically erasable programmable read-only Memory (EEPROM)) within the BMS. However, the BMS, which is located very close to the battery, is highly likely to burn out along with the battery in an emergency, such as a serious fire occurring in the vehicle. Here, there arises a problem that the storage device (e.g., in the form of an EEPROM IC) within the BMS may also be damaged, making the recorded information unusable.

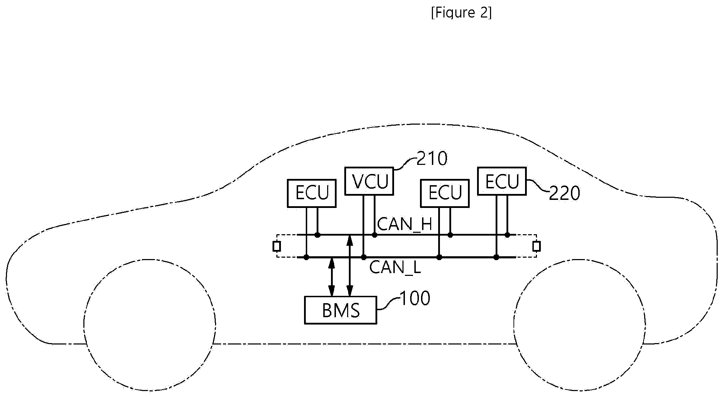

FIG. 2 is a diagram conceptually showing a communication method between a plurality of ECUs in a car, which is one of the embodiments to which the present invention is applied.

A vehicle according to embodiments of the present disclosure may be, for example, an electric vehicle, a hybrid vehicle, or a plug-in hybrid vehicle, and may include a battery pack including a battery and a battery management apparatus (BMS) according to embodiments of the present invention. The vehicle may include four-wheeled vehicles and two-wheeled vehicles, and operate by receiving power from a battery pack.

For operation of the vehicle, control operations such as motor drive control, regenerative braking control, air conditioning load control, and electric load power (12V) supply control are required. Referring to FIG. 2, several electronic control units (ECUs) may be included in a car for these control operations.

Meanwhile, the BMS 100 is one of the control devices in the vehicle and may be understood as a type of ECU. In addition, in this specification, the ECU may be used as a concept including a vehicle control unit (VCU) 210, which is the highest level controller that manages all operations and controls within the vehicle. ECU 220 may also refer to one or more ECUs in a vehicle (or various devices or systems using a battery) under the control of VCU 210.

The ECU may include random access memory (RAM) and read only memory (ROM) as internal storage devices. The RAM within the ECU may temporarily store various signals that occur while the vehicle is operating. The stored data gradually disappears over time and is lost when electricity is not supplied. On the other hand, the ROM within the ECU records control data necessary for the vehicle to move and the data stored in the ROM is not arbitrarily erased or modified.

When the ECU is applied to electric vehicles (including hybrids), it is also called EPCU (Electric Power Control Unit), which is a device that controls the overall movement of the vehicle along with controlling the motor in the vehicle. EPCU may be understood as having a similar function to ECU and a transmission control unit (TCU).

Meanwhile, multiple ECUs included in a car may communicate with each other through a controller area network (CAN) bus. The controller area network (CAN) communication is a standard communication specification designed to allow microcontrollers or devices to communicate with each other in a vehicle without a host computer. The CAN communication is a non-host bus message-based network protocol mainly used for communication between several controllers and is mainly used in vehicles.

The communication method used by the CAN protocol is a multi-master communication method, and all CAN controllers (ECU, VCU, and BMS in FIG. 2) which share a communication bus act as masters and each controller may use the CAN bus whenever each controller needs to use the CAN bus. The CAN protocol also uses a message-oriented transmission protocol and is electrically differentiated using two twisted pair wires, making it resistant to electrical noise.

Referring to FIG. 2, all nodes on the CAN bus are connected through a two-wire bus, and each signal line consists of CAN_H (High) and CAN_L (Low) which have different voltages. The CAN communication uses a Half Duplex method, which transmits data one bit at a time through two complementary signals on the CAN_H and CAN_L bus wires. The CAN bus has two logic states, a dominant state and a recessive state, depending on the signal state. The dominant state may represent logic '0' and the recessive state may represent logic '1'. In the recessive state, both CAN_H and CAN_L bus pins are biased to the same level (e.g., 2.5V). In the dominant state, the CAN_H bus pins are biased to a high voltage potential (e.g., ~3.5V) and the CAN_L bus pins are biased to a low voltage potential (e.g., ~1.5V). Communication between CAN nodes may be achieved by determining the voltage difference between two signal lines as recessive if the voltage difference is lower than a certain threshold and as dominant if the voltage difference is greater than another threshold.

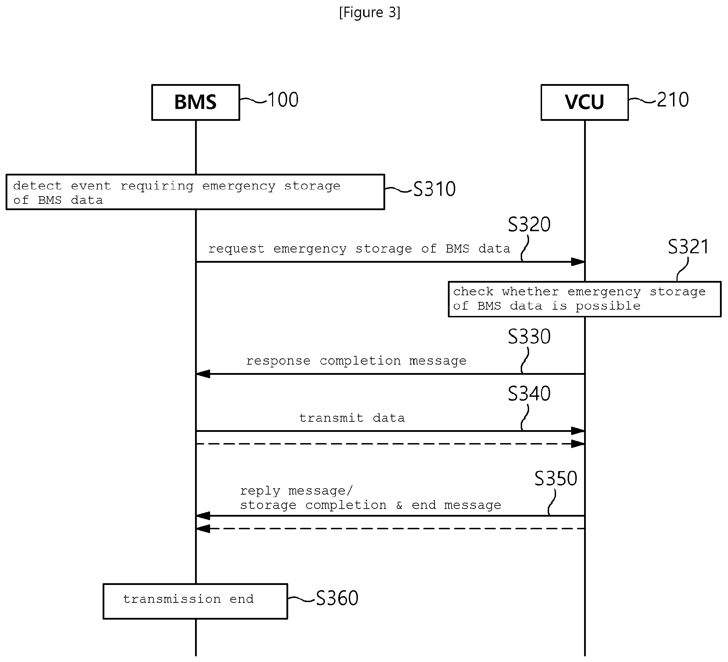

FIG. 3 shows an operational flowchart between components in the BMS data storing method according to an embodiment of the present invention.

FIG. 3 shows a first embodiment showing how cooperative control is performed between components for BMS data storing method according to embodiments of the present invention.

Referring to FIG. 3, in this embodiment, components involved in the BMS data storage method may be the battery management system (BMS) 100 and the vehicle control unit (VCU) 210 in a vehicle. This embodiment is presented on the assumption that the VCU is a safer ECU than the BMS, which is located in a dangerous place closer to the battery in an emergency situation such as fire. As previously shown in FIG. 2, communication may be performed between the BMS and VCU using the CAN protocol. Therefore, message transfer between the BMS and VCU shown in FIG. 3 may be performed through the CAN protocol.

The battery management apparatus (BMS) 100 may detect an event requiring emergency storage of BMS data (S310). Here, the event requiring emergency storage of BMS data may include an event that the temperature of the battery detected by the battery management apparatus is above a threshold. Furthermore, the event that requires emergency storage of BMS data may also include any situation in which there is a risk of loss of data record due to a problem occurring in a storage device (or recording device) storing BMS data.

When the battery management apparatus 100 detects an event requiring emergency storage of the BMS data, the battery management apparatus 100 requests for emergency storage of the BMS data to the first controller in the vehicle (S320). Here, the first controller may be the VCU 210, which is a top controller that centrally controls a plurality of ECUs communicating with the battery management apparatus 100.

The first controller that has received the data emergency storage request from the battery management apparatus 100 may check whether the first controller can receive and store the emergency storage data (S321). More specifically, the first controller may determine whether the first controller is able to store the emergency storage data by checking whether a CAN line, which is a communication path with the battery management apparatus, is normal and whether a space capable of storing the data requiring emergency storage is secured.

If the first controller 210 determines that the first controller itself has the ability to store data requiring emergency storage, the first controller may transmit a response completion message to the request of the BMS to the battery management apparatus 100 (S330). The battery management apparatus 100 that receives a response completion message may transmit data requiring emergency storage to the first controller (S340).

The first controller may receive and store data requiring emergency storage. Here, the number of data transmissions may be one or two or more times, and the number of data transmissions may be determined based on an amount of data requiring emergency storage and an amount of data that can be transmitted via one CAN frame. When multiple times of data transmission occur, the first controller may deliver a reply message to the BMS for each data transmission (S350). When data storage is completed, the first controller 210 may transmit a storage completion and end message (S350) to the battery management apparatus 100. Upon receiving the storage completion message, the battery management apparatus 100 may end the backup transmission procedure of the BMS data (S360).

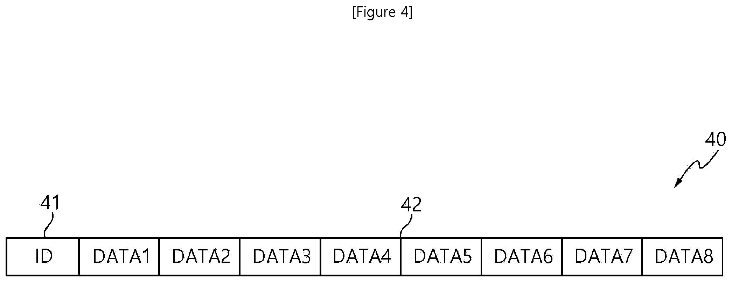

FIG. 4 shows a structure of a CAN communication frame used in the BMS data storing method according to embodiments of the present invention.

The CAN communication frame 40 shown in FIG. 4 may be a message frame exchanged between a battery management system (BMS) and a vehicle control unit (VCU). The CAN communication frame 40 shown in FIG. 4 may also be a message exchanged between a BMS, a VCU, and a plurality of electronic control units (ECUs). The CAN communication frame 40 according to embodiments of the present invention may be configured to include an ID field 41 and data fields (data 1 to data 8) 42.

According to embodiments of the present invention, the frame ID 41 with "Ox100" may indicate a message frame transmitted from the BMS to the VCU and the frame ID 41 with "Ox101" may indicate a message frame transmitted from the VCU to the BMS.

In addition, among the data fields, the "DATA1" field may indicate whether the corresponding message frame is a message requesting urgent storage (e.g., indicated as "1") or a message responding as to whether storage is possible (e.g., indicated as "2"). The subsequent "DATA2" field may indicate a transmission (Tx) sequence (0 to 255) and the "DATA3" to "DATA8" fields may indicate transmitted payload data. Here, the transmission period of the CAN communication frame may be 10ms.

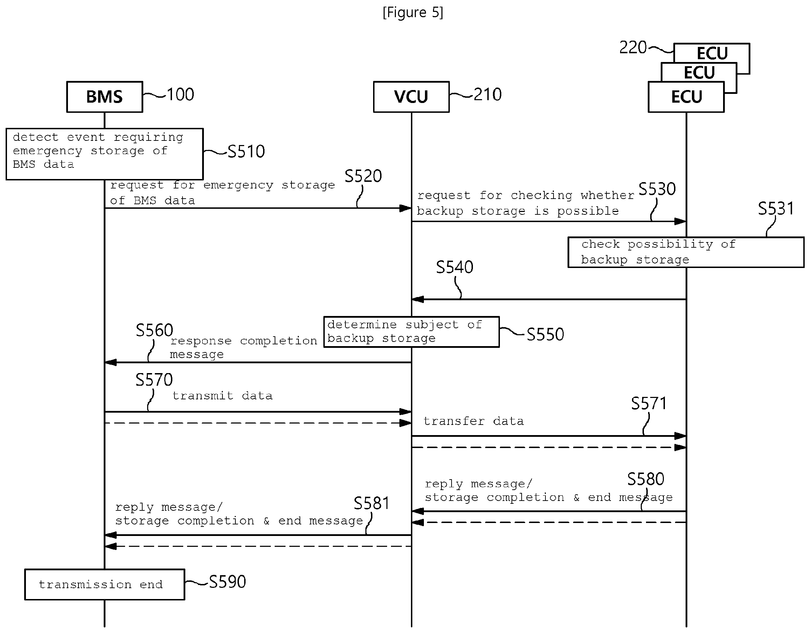

FIG. 5 shows an operational flowchart between components in the BMS data storing method according to another embodiment of the present disclosure.

FIG. 5 depicts a second embodiment showing how cooperative control is performed among several components for BMS data storage according to the present invention.

Referring to FIG. 5, components involved in the BMS data storage method in this embodiment may be the battery management apparatus (BMS) 100, the vehicle control unit (VCU) 210, and one or more electronic control units (ECUs) 220 within the vehicle. Communication may be performed among BMS, VCU, and ECU using the CAN protocol. Therefore, messages among BMS, VCU, and ECU may be transferred through the CAN protocol.

According to the embodiment shown in FIG. 5, the battery management apparatus (BMS) 100 may detect an event requiring emergency storage of BMS data (S510). Here, the event requiring emergency storage of BMS data may include an event that the temperature of the battery detected by the battery management apparatus exceeds a threshold. Events that require emergency storage of BMS data may also include any situation in which there is a risk of loss of data record due to a problem occurring in a storage device (or recording device) storing BMS data.

When the battery management apparatus detects an event requiring emergency storage of the BMS data, the battery management apparatus 100 may request emergency storage of the BMS data to the first controller in the vehicle (S520). Here, the first controller may be the VCU 210, which is the highest controller that centrally controls a plurality of ECUs communicating with the BMS.

The first controller that has received the data emergency storage request from the battery management apparatus (BMS) may forward the data emergency storage request to one or more second controllers under the first controller's control and request the one or more second controllers to check whether backup storage is possible (S530). The one or more second controllers that have received a request message for confirming backup storage availability from the first controller may check whether the second controller itself can receive and store the emergency storage data (S531). Here, the second controller may determine whether the second controller itself can store emergency storage data by checking whether the CAN line, which is a communication path with the VCU, is normal and whether space for storing data that requires urgent storage is secured. Here, the second controller may be one of all ECUs in the vehicle except the VCU and may communicate with the VCU through the CAN line.

In other words, in this embodiment, the first controller 210 may serve as a simple gateway that transfers BMS data received from the battery management apparatus 100 to the second controller 220.

If the second controller determines that the second controller itself has the ability to store data that requires emergency storage, the second controller may transmit a response to the request to confirm whether backup storage is possible to the first controller (S540). The first controller, which has received response completion messages from one or more second controllers, may determine an entity that will perform data backup storage based on the received response completion messages (S550). Here, the first controller may select the safest controller for storing BMS data among the plurality of second controllers which responded that backup data storage is possible and confirm the selected controller as a backup storage subject.

Here, the safest controller to store BMS data may be selected as the ECU located furthest from the battery pack (including a battery and a battery management apparatus) or the ECU with the lowest temperature, or the most appropriate controller when both of these conditions are considered. In other words, the safest controller for storing BMS data is determined based on one or more of the availability of space to store BMS data, the location from the battery pack, and the temperature of the corresponding controller.

In the instance that the first controller 210 confirmed a subject performing backup storage, the first controller 210 may transmit a response completion message to the battery management apparatus (BMS) 100 (S560). Afterwards, the first controller that receives the BMS data from the battery management apparatus may transfer the BMS data to the ECU confirmed as the backup storage subject (S570, S571). The ECU 220, the backup subject, may receive and store data requiring emergency storage. Here, the number of data transmission and delivery may be 1 time, or 2 or more times, and the number of transmission and delivery may be determined based on an amount of data requiring emergency storage and an amount of data that can be transmitted via one CAN frame. In the case where plural times of data transmission are performed, each time the transmission is completed, the backup subject ECU may transmit a reply message to the battery management apparatus through the first controller (S580, S581). When data storage is completed, the backup subject ECU 220 may transmit a storage completion and end message to the battery management apparatus 100 through the first controller (S580, S581). The battery management apparatus, which has received the storage completion message, may end the BMS data transmission procedure (S590).

Meanwhile, even in the case of the embodiment shown in FIG. 5, the CAN communication frame 40 exchanged between the BMS and VCU shown in FIG. 4 may be applied. Here, the CAN communication frame 40 may be a message exchanged between the BMS, the VCU, and the plurality of ECUs. The CAN communication frame 40 according to embodiments of the present invention may be configured to include an ID field 41 and data fields (data 1 to data 8 fields) 42.

According to this embodiment, when the frame ID is "Ox100", it may represent a message frame transmitted from the BMS to the VCU. Furthermore, when the frame ID 41 is "Ox101", it may represent a message frame transmitted from the VCU to the BMS. In addition, in cases where the frame ID with "Ox102" or higher may be assigned to different ECUs to indicate that the frame is transmitted by the corresponding ECU. Here, the ID for each ECU may be predetermined and pre-shared by all nodes (i.e. VCU, BMS, and one or more ECUs) on the CAN bus, and stored in each node (e.g., in ROM of each device).

In addition, among the data fields, the "DATA1" field may indicate whether the message frame is a message requesting emergency storage (e.g., marked as "1") or a message responding to whether the emergency storage is possible (e.g., marked as "2"). The subsequent "DATA2" field may indicate a transmission (Tx) sequence (0 to 255), and the "DATA3" to "DATA8" fields may indicate payload data transmitting.

Meanwhile, a BMS data storage system configured to execute the BMS data storing method, shown in FIGS. 3 and 5, includes a first controller located within a device containing a battery and a battery management apparatus configured to, upon detecting an event requiring emergency storage of the BMS data, request for emergency storage of the BMS data to the first controller, to receive a response to the request for the emergency storage of the BMS data from the first controller, and to transmit the BMS data to the first controller.

The first controller may be configured to, in response to the request for emergency storage of the BMS data, determine whether a communication path between the battery management apparatus and the first controller is normal; check whether the first controller secures storage space to store the BMS data and send a response message to the battery management apparatus; and receive the BMS data from the battery management apparatus and store the BMS data in a storage device within the first controller.

Meanwhile, BMS data storage system further includes one or more second controllers which are under the control of the first controller.

The first controller is further configured to, in response to the request for emergency storage of the BMS data, determine which of the second controllers is the safest to store the BMS data; receive the BMS data from the battery management apparatus; and transmit the BMS data to the safest second controller.

The safest second controller is determined based on one or more of availability of space to store the BMS data, location from the battery pack, and temperature of the corresponding controller.

The request for emergency storage of the BMS data and the transmission of the BMS data may be made through Controller Area Network (CAN) communication.

At least one frame used for the CAN communication may include a field of an identifier that specifies a sender and a receiver of the frame and one or more data fields.

The one or more data fields may include information indicating whether the frame is a message requesting emergency storage or a message responding to whether the emergency storage is possible.

The identifier that specifies a sender and a receiver of the frame may be uniquely assigned to each of the battery management apparatus, the first controller, and one or more second controllers under control of the first controller, and assignment information for each identifier may be pre-shared and pre-stored by the battery management apparatus, the first controller, and the one or more second controllers.

The first controller may be a vehicle control unit (VCU) which is the highest level controller that centrally controls one or more electronic control units (ECUs) communicating with the battery management apparatus.

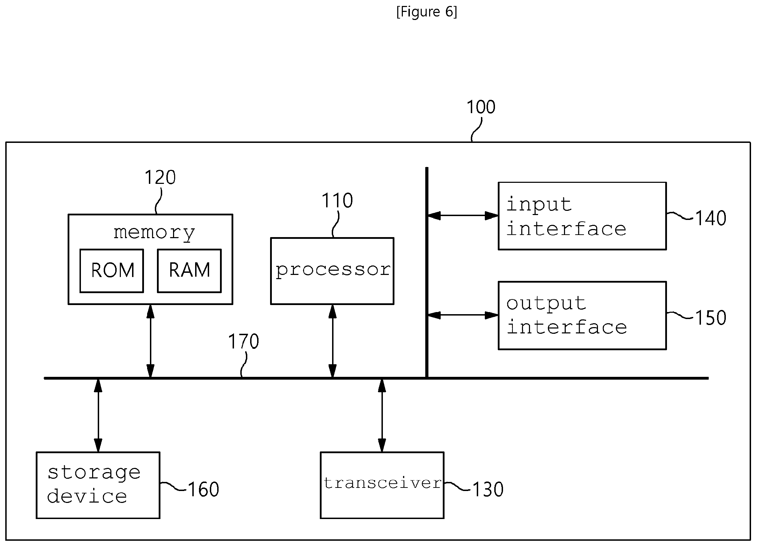

FIG. 6 is a block diagram of a battery management apparatus according to embodiments of the present invention.

Referring to FIG. 6, the battery management apparatus 100 according to embodiments of the present invention includes a processor 110 and a memory 120 that stores at least one instruction executed through the processor. Here, the processor may be, for example, a micro controller Unit (MCU) or another type of controller.

The at least one instruction may include an instruction to detect at least one event requiring emergency storage of BMS data; an instruction to, upon detecting an event requiring emergency storage of the BMS data, request for emergency storage of the BMS data to a first controller in a device including the battery; and an instruction to receive a response to the request for the emergency storage of the BMS data from the first controller and to transmit the BMS data to the first controller.

The at least one event requiring emergency storage of BMS data may include an event that temperature of the battery detected by the battery management apparatus equal to or greater than a threshold.

The request for emergency storage of the BMS data and the transmission of the BMS data may be made through Controller Area Network (CAN) communication.

At least one frame used for the CAN communication may include a field of an identifier that specifies a sender and a receiver of the frame and one or more data fields.

The one or more data fields may include information indicating whether the frame is a message requesting emergency storage or a message responding to whether the emergency storage is possible.

The identifier that specifies a sender and a receiver of the frame may be uniquely assigned to each of the battery management apparatus, the first controller, and one or more second controllers under control of the first controller, and assignment information for each identifier may be pre-shared and pre-stored by the battery management apparatus, the first controller, and the one or more second controllers.

The BMS data transmitted to the first controller is transmitted to and stored in the first controller or a selected one among one or more second controllers interoperating with the first controller.

Meanwhile, the battery management apparatus 100 according to embodiments of the present disclosure may further include an input interface device 140, an output interface device 150, a storage device 160, etc. Respective components included in the battery management apparatus 100 may be connected by a bus 170 and can communicate with each other.

Additionally, the memory 120 (or storage unit) may include at least one of a volatile storage medium and a non-volatile storage medium. For example, the memory may include at least one of read only memory (ROM) and random access memory (RAM), and may include electrically erasable programmable read-only Memory (EEPROM). The memory 120 according to embodiments of the present invention may store battery usage record related information and diagnostic occurrence related items.

The operations of the method according to the embodiments of the present disclosure may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

## Claims

1. A battery management apparatus (100) for managing battery management system, BMS, data related to a state of a battery, the apparatus (100) comprising:
at least one processor (110); and
a memory (120) configured to store at least one instruction to be executed by the at least one processor (110),
wherein the at least one instruction includes:
an instruction to detect at least one event requiring an emergency storage of the BMS data;
an instruction to, upon detecting the at least one event requiring the emergency storage of the BMS data, request for the emergency storage of the BMS data to a first controller (210) in a device including the battery; and
an instruction to receive a response to the request for the emergency storage of the BMS data from the first controller (210) and to transmit the BMS data to the first controller (210); wherein one or more second controllers (220) are included in the BMS data storage system and are under control of the first controller (210);
**characterized in that** the at least one instruction further includes:
an instruction to, in response to the request for the emergency storage of the BMS data, cause the first controller (210) to determine which of the one or more second controllers (220) under the control of the first controller (210) is a safest second controller to store the BMS data, the safest second controller being determined based on one or more of an availability of a storage space to store the BMS data, a location from the battery, and a temperature of a corresponding controller of the one or more second controllers (220);
an instruction to cause the first controller (210) to receive the BMS data from the battery management apparatus (100) and to transmit the BMS data to the safest second controller (220) of the one or more second controllers (220) for storage.

2. The apparatus of claim 1, wherein the at least one event requiring the emergency storage of the BMS data includes an event that a temperature of the battery detected by the battery management apparatus (100) is equal to or greater than a threshold temperature.

3. The apparatus of claim 1, wherein the request for the emergency storage of the BMS data and a transmission of the BMS data are made through Controller Area Network,CAN, communication.

4. The apparatus of claim 3, wherein at least one frame (40) used for the CAN communication includes a field (41) of an identifier that specifies a sender and a receiver of the at least one frame and one or more data fields (42).

5. The apparatus of claim 4, wherein the one or more data fields (42) includes information indicating whether the at least one frame is a message requesting the emergency storage or a message responding to whether the emergency storage is possible.

6. The apparatus of claim 4, wherein the identifier (41) that specifies the sender and the receiver of the at least one frame (40) is uniquely assigned to each of the battery management apparatus (100), the first controller (210), and the one or more second controllers (220) under a control of the first controller (210), and
wherein assignment information for the identifier is pre-shared and pre-stored by the battery management apparatus (100), the first controller (210), and the one or more second controllers (220).

7. A system for storing battery management system, BMS, data related to a state of a battery, the system comprising:
a first controller (210) located within a device containing the battery; and
a battery management apparatus (100) according to claim 1.

8. The system of claim 7, wherein the request for the emergency storage of the BMS data and the transmitting of the BMS data are made through Controller Area Network (CAN) communication.

9. The system of claim 8, wherein at least one frame (40) used for the CAN communication includes a field (41) of an identifier that specifies a sender and a receiver of the at least one frame and one or more data fields (42).

10. The system of claim 9, wherein the one or more data fields (42) includes information indicating whether the at least one frame (40) is a message requesting the emergency storage or a message responding to whether the emergency storage is possible.

## Patentansprüche

1. Batteriemanagementvorrichtung (100) zum Verwalten von Daten eines Batteriemanagementsystems, BMS, die sich auf einen Zustand einer Batterie beziehen, wobei die Vorrichtung (100) Folgendes umfasst:
mindestens einen Prozessor (110); und
einen Speicher (120), der konfiguriert ist, um mindestens eine Anweisung zu speichern, die von dem mindestens einen Prozessor (110) auszuführen ist,
wobei die mindestens eine Anweisung Folgendes enthält:
eine Anweisung, um mindestens ein Ereignis zu erkennen, das eine Notfallspeicherung der BMS-Daten erfordert;
eine Anweisung, um bei Erkennen des mindestens einen Ereignisses, das die Notfallspeicherung der BMS-Daten erfordert, die Notfallspeicherung der BMS-Daten bei einer ersten Steuerung (210) in einer Vorrichtung, die die Batterie enthält, anzufordern; und
eine Anweisung, um eine Antwort auf die Anforderung zur Notfallspeicherung der BMS-Daten von der ersten Steuerung (210) zu empfangen und die BMS-Daten an die erste Steuerung (210) zu übertragen;
wobei eine oder mehrere zweite Steuerungen (220) in dem BMS-Datenspeichersystem enthalten sind und unter der Kontrolle der ersten Steuerung (210) stehen;
**dadurch gekennzeichnet, dass** die mindestens eine Anweisung ferner Folgendes enthält:
eine Anweisung, um als Reaktion auf die Anforderung zur Notfallspeicherung der BMS-Daten die erste Steuerung (210) zu veranlassen, zu bestimmen, welche der einen oder mehreren zweiten Steuerungen (220) unter der Kontrolle der ersten Steuerung (210) eine sicherste zweite Steuerung zum Speichern der BMS-Daten ist, wobei die sicherste zweite Steuerung auf der Grundlage von einem oder mehreren von einer Verfügbarkeit eines Speicherplatzes zum Speichern der BMS-Daten, einer Position von der Batterie und einer Temperatur einer entsprechenden Steuerung der einen oder mehreren zweiten Steuerungen (220) bestimmt wird;
eine Anweisung, um die erste Steuerung (210) zu veranlassen, die BMS-Daten von der Batteriemanagementvorrichtung (100) zu empfangen und die BMS-Daten zur Speicherung an die sicherste zweite Steuerung (220) der einen oder mehreren zweiten Steuerungen (220) zu übertragen.

2. Vorrichtung nach Anspruch 1, wobei das mindestens eine Ereignis, das die Notfallspeicherung der BMS-Daten erfordert, ein Ereignis enthält, bei dem eine von der Batteriemanagementvorrichtung (100) erkannte Temperatur der Batterie größer gleich einer Schwellentemperatur ist.

3. Vorrichtung nach Anspruch 1, wobei die Anforderung zur Notfallspeicherung der BMS-Daten und eine Übertragung der BMS-Daten über eine Controller Area Network, CAN,-Kommunikation erfolgen.

4. Vorrichtung nach Anspruch 3, wobei mindestens ein für die CAN-Kommunikation verwendeter Rahmen (40) ein Feld (41) eines Identifikators, der einen Sender und einen Empfänger des mindestens einen Rahmens spezifiziert, und ein oder mehrere Datenfelder (42) enthält.

5. Vorrichtung nach Anspruch 4, wobei das eine oder die mehreren Datenfelder (42) Informationen enthalten, die angeben, ob der mindestens eine Rahmen eine Nachricht ist, die die Notfallspeicherung anfordert, oder eine Nachricht, die darauf antwortet, ob die Notfallspeicherung möglich ist.

6. Vorrichtung nach Anspruch 4, wobei der Identifikator (41), der den Sender und den Empfänger des mindestens einen Rahmens (40) spezifiziert, eindeutig jeweils der Batteriemanagementvorrichtung (100), der ersten Steuerung (210) und der einen oder den mehreren zweiten Steuerungen (220) unter einer Kontrolle der ersten Steuerung (210) zugewiesen ist, und
wobei Zuweisungsinformationen für den Identifikator von der Batteriemanagementvorrichtung (100), der ersten Steuerung (210) und der einen oder den mehreren zweiten Steuerungen (220) vorab geteilt und vorab gespeichert werden.

7. System zum Speichern von Daten eines Batteriemanagementsystems, BMS, die sich auf einen Zustand einer Batterie beziehen, wobei das System Folgendes umfasst:
eine erste Steuerung (210), die sich innerhalb einer die Batterie enthaltenden Vorrichtung befindet; und
eine Batteriemanagementvorrichtung (100) nach Anspruch 1.

8. System nach Anspruch 7, wobei die Anforderung zur Notfallspeicherung der BMS-Daten und das Übertragen der BMS-Daten über eine Controller Area Network (CAN)-Kommunikation erfolgen.

9. System nach Anspruch 8, wobei mindestens ein für die CAN-Kommunikation verwendeter Rahmen (40) ein Feld (41) eines Identifikators, der einen Sender und einen Empfänger des mindestens einen Rahmens spezifiziert, und ein oder mehrere Datenfelder (42) enthält.

10. System nach Anspruch 9, wobei das eine oder die mehreren Datenfelder (42) Informationen enthalten, die angeben, ob der mindestens eine Rahmen (40) eine Nachricht ist, die die Notfallspeicherung anfordert, oder eine Nachricht, die darauf antwortet, ob die Notfallspeicherung möglich ist.

## Revendications

1. Appareil de gestion de batterie (100) pour gérer des données de système de gestion de batterie, BMS, relatives à un état d'une batterie, l'appareil (100) comprenant :
au moins un processeur (110) ; et
une mémoire (120) configurée pour stocker au moins une instruction à exécuter par l'au moins un processeur (110),
dans lequel l'au moins une instruction inclut :
une instruction pour détecter au moins un événement nécessitant un stockage d'urgence des données de BMS ;
une instruction pour, lors de la détection de l'au moins un événement nécessitant le stockage d'urgence des données de BMS, demander le stockage d'urgence des données de BMS à un premier contrôleur (210) dans un dispositif incluant la batterie ; et
une instruction pour recevoir une réponse à la demande de stockage d'urgence des données de BMS provenant du premier contrôleur (210) et pour transmettre les données de BMS au premier contrôleur (210) ;
dans lequel un ou plusieurs seconds contrôleurs (220) sont inclus dans le système de stockage de données de BMS et sont sous le contrôle du premier contrôleur (210) ;
**caractérisé en ce que** l'au moins une instruction inclut en outre :
une instruction pour, en réponse à la demande de stockage d'urgence des données de BMS, amener le premier contrôleur (210) à déterminer lequel des un ou plusieurs seconds contrôleurs (220) sous le contrôle du premier contrôleur (210) est un second contrôleur le plus sûr pour stocker les données de BMS, le second contrôleur le plus sûr étant déterminé sur la base d'un ou de plusieurs parmi une disponibilité d'un espace de stockage pour stocker les données de BMS, un emplacement par rapport à la batterie, et une température d'un contrôleur correspondant des un ou plusieurs seconds contrôleurs (220) ;
une instruction pour amener le premier contrôleur (210) à recevoir les données de BMS de l'appareil de gestion de batterie (100) et à transmettre les données de BMS au second contrôleur le plus sûr (220) des un ou plusieurs seconds contrôleurs (220) pour le stockage.

2. Appareil selon la revendication 1, dans lequel l'au moins un événement nécessitant le stockage d'urgence des données de BMS inclut un événement selon lequel une température de la batterie détectée par l'appareil de gestion de batterie (100) est égale ou supérieure à une température de seuil.

3. Appareil selon la revendication 1, dans lequel la demande de stockage d'urgence des données de BMS et une transmission des données de BMS sont effectuées par l'intermédiaire d'une communication de réseau de zone de contrôleur, CAN.

4. Appareil selon la revendication 3, dans lequel au moins une trame (40) utilisée pour la communication CAN inclut un champ (41) d'un identifiant qui spécifie un émetteur et un récepteur de l'au moins une trame et un ou plusieurs champs de données (42).

5. Appareil selon la revendication 4, dans lequel les un ou plusieurs champs de données (42) incluent des informations indiquant si l'au moins une trame est un message demandant le stockage d'urgence ou un message répondant à la question de savoir si le stockage d'urgence est possible.

6. Appareil selon la revendication 4, dans lequel l'identifiant (41) qui spécifie l'émetteur et le récepteur de l'au moins une trame (40) est attribué de manière unique à chacun de l'appareil de gestion de batterie (100), du premier contrôleur (210), et des un ou plusieurs seconds contrôleurs (220) sous un contrôle du premier contrôleur (210), et
dans lequel des informations d'attribution pour l'identifiant sont pré-partagées et pré-stockées par l'appareil de gestion de batterie (100), le premier contrôleur (210), et les un ou plusieurs seconds contrôleurs (220).

7. Système de stockage de données de système de gestion de batterie, BMS, relatives à un état d'une batterie, le système comprenant :
un premier contrôleur (210) situé à l'intérieur d'un dispositif contenant la batterie ; et
un appareil de gestion de batterie (100) selon la revendication 1.

8. Système selon la revendication 7, dans lequel la demande de stockage d'urgence des données de BMS et la transmission des données de BMS sont effectuées par l'intermédiaire d'une communication de réseau de zone de contrôleur (CAN).

9. Système selon la revendication 8, dans lequel au moins une trame (40) utilisée pour la communication CAN inclut un champ (41) d'un identifiant qui spécifie un émetteur et un récepteur de l'au moins une trame et un ou plusieurs champs de données (42).

10. Système selon la revendication 9, dans lequel les un ou plusieurs champs de données (42) incluent des informations indiquant si l'au moins une trame (40) est un message demandant le stockage d'urgence ou un message répondant à la question de savoir si le stockage d'urgence est possible.
